# EUROPEAN PATENT APPLICATION

(11) **EP 4 635 844 A1**
(43) Date of publication of application: **22.10.2025**
(21) Application number: 25162122.3
(22) Date of filing: 06.03.2025
(51) Int. Cl.: B64C 3/14, B64C 27/467, B63H 1/26, B64C 11/18, F03B 3/12, F04D 29/24

(54) **LOW DRAG AIRFOIL**

(30) Priority: 15.04.2024 US 202418635872
(71) Applicant: Lockheed Martin Corporation, Bethesda, Maryland 20817 (US)
(72) Inventor: Min, Byung-Young, Trumbull, CT 06611 (US)
(74) Representative: Schmitt-Nilson Schraud Waibel Wohlfrom Patentanwälte Partnerschaft mbB

(57) **Abstract**

An airfoil for a rotor blade includes an airfoil body having a leading edge, a trailing edge opposite the leading edge, an upper surface and a lower surface opposite the upper surface. wherein the airfoil body, in cross-section, has a profile defined by a chord length, a maximum thickness at a midpoint of the chord length, and an s-shaped camber line.

## Description

### STATEMENT REGARDING FEDERALLY SPONSORED RESEARCH OR DEVELOPMENT

This invention was made with U.S. Government support under Contract No. W911W6-19-9-0005 awarded by the U.S. Army. The Government has certain rights in the invention.

Concepts described herein relate to low drag airfoils used on aircraft, especially on aircraft with rotating blades. In some examples, the aircraft is a dual rotor rotorcraft.

Aircraft, and specifically rotorcraft, utilize airfoils to create thrust and/or lift. In such applications the rotor of the aircraft includes, while rotating, an advancing side and a retreating side. Airfoil designs disclosed herein optimize rotor performance on the advancing side and on the retreating side of the rotor system. The concepts disclosed herein can be used on single rotor rotorcraft and dual rotor rotorcraft. In some examples, the dual rotor rotorcraft includes counter rotating blades.

In one aspect, an airfoil for a rotor blade is used on a dual-rotor rotorcraft. The airfoil includes an airfoil body having a leading edge, a trailing edge opposite the leading edge, an upper surface and a lower surface opposite the upper surface. The airfoil body, in cross-section, has a profile defined by a chord length, a maximum thickness, and a camber line. The chord length extends from the leading edge of the airfoil body to the trailing edge of the airfoil body. The maximum thickness is at a midpoint of the chord length and is defined by a diameter of a largest circle extending between the upper surface of the airfoil body and the lower surface of the airfoil body. The camber line is an S-shape that the camber line has a positive camber from the leading edge of the airfoil body to the midpoint of the chord length and has a negative camber from the midpoint of the chord length to the trailing edge of the airfoil body.

In another aspect, an airfoil for a rotor blade includes an airfoil body having a leading edge, a trailing edge opposite the leading edge, an upper surface and a lower surface opposite the upper surface. The airfoil body, in cross-section, has a profile defined by: a chord length extending from the leading edge of the airfoil to the trailing edge of the airfoil, a maximum thickness at a midpoint of the chord length, the maximum thickness being defined by a diameter of a largest circle extending between the upper surface of the airfoil and the lower surface of the airfoil, and a camber line. The camber line has a negative camber from the midpoint of the chord length to the trailing edge of the airfoil.

Other aspects will become apparent by consideration of the detailed description and accompanying drawings.
FIG. 1 is a perspective view of an aircraft including a coaxial rotor system.
FIG. 2 illustrates airfoil cross-sections of an airfoil for the aircraft of FIG. 1.
FIG. 3A illustrates an airfoil cross-section of an airfoil for the aircraft of FIG. 1.
FIG. 3B is a re-aligned cross-section of the airfoil of FIG. 3A.
FIG. 4 is a cross-section of an airfoil for the aircraft of FIG. 1.
FIG. 5A is an airflow diagram of a non-RTE airfoil in a reverse flow condition.
FIG. 5B is an airflow diagram of an RTE airfoil in a reverse flow condition.
FIG. 6A is an airflow diagram of a non-RTE airfoil in a forward flow condition.
FIG. 6B is an airflow diagram of a non-RTE airfoil in a reverse flow condition.
FIG. 7A is an airflow diagram of an RTE airfoil in a forward flow condition.
FIG. 7B is an airflow diagram of an RTE airfoil in a reverse flow condition.
FIG. 8 is a comparison of lift to drag ratio of a rotor with nominal airfoil and of a rotor with an RTE airfoil.
FIG. 9 is a comparison of drag of a rotor with nominal airfoil and of a rotor with an RTE airfoil.

Before any embodiments are explained in detail, it is to be understood that the embodiments described herein are provided as examples and the details of construction and the arrangement of the components described herein or illustrated in the accompanying drawings should not be considered limiting. Also, it is to be understood that the phraseology and terminology used herein is for the purpose of description and should not be regarded as limited. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting, and coupling. Further, "connected" and "coupled" are not restricted to physical or mechanical connections or couplings. In some operable embodiments according to the disclosure, the drawings are to scale, although not-to-scale embodiments are also contemplated.

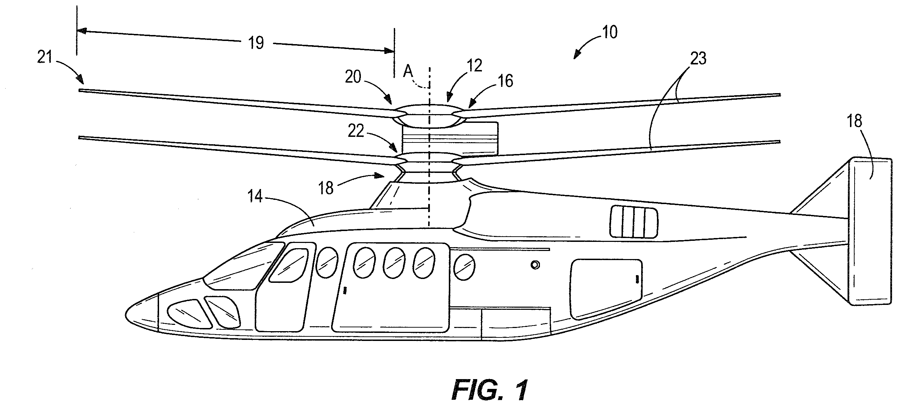

FIG. 1 illustrates a high-speed compound rotary-wing aircraft 10 with a dual, counter-rotating, coaxial rotor system 12. The aircraft 10 is also referred to as a dual-rotor rotorcraft. Such an aircraft 10 is capable of travel at higher speeds than conventional single rotor helicopters due in part to the balance of lift between the advancing side of the main rotor blades on the upper and lower rotor systems. In addition, the retreating sides of the rotors are also generally free from classic retreating blade stall that conventional single or tandem rotor helicopters may suffer from. The aircraft 10 includes an airframe 14 that supports the dual, counter-rotating, coaxial rotor system 12 as well as a translational thrust system 15 which provides translational thrust generally perpendicular to thrust provided by the coaxial rotor system 12. In this context, counter-rotating means that rotor blades 23 rotate in opposite directions. In one embodiment, the translational thrust system 15 includes a pusher propeller mounted within an aerodynamic cowling. Although a particular aircraft configuration is illustrated, other rotary wing aircraft configurations are contemplated.

The coaxial rotor system 12 includes a first rotor system, such as an upper rotor system 16 for example, and a second rotor system, such as a lower rotor system 18 for example. Each rotor system 16, 18 includes the rotor blades 23 mounted to a rotor hub assembly 20, 22 for rotation about a rotor axis of rotation A. The plurality of main rotor blades 23 project substantially radially outward from each of the hub assemblies 20, 22 and are connected thereto in any manner known to a person skilled in the art. Any number of rotor blades 23 may be used with the coaxial rotor system 12.

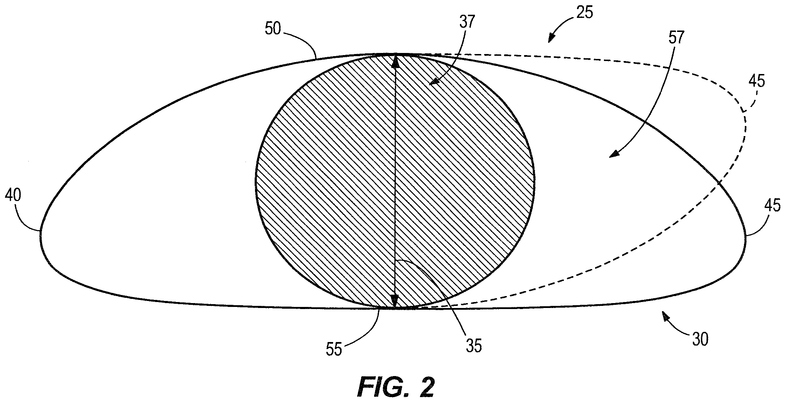

FIG. 2 illustrates airfoil cross-sections of an airfoil for the rotorcraft 10. The airfoils are shown in cross-sections, which are taken perpendicularly from a leading edge 40 of the airfoils. Two airfoils are shown in FIG. 2, a reverse trailing edge airfoil (i.e., an "RTE" airfoil) 25 and an elliptical airfoil 30. In FIG. 2, the leading edges 40 of the RTE airfoil 25 and the elliptical airfoil 30 are shown overlayed to illustrate the differences between the two airfoils 25, 30. Both the RTE airfoil 25 and the elliptical airfoil 30 include a trailing edge 45 opposite of the leading edge 40, and an upper surface 50 opposite of a lower surface 55. Together, the leading edge 40, trailing edge 45, upper surface 50, and the lower surface 55 make up an airfoil body 57.

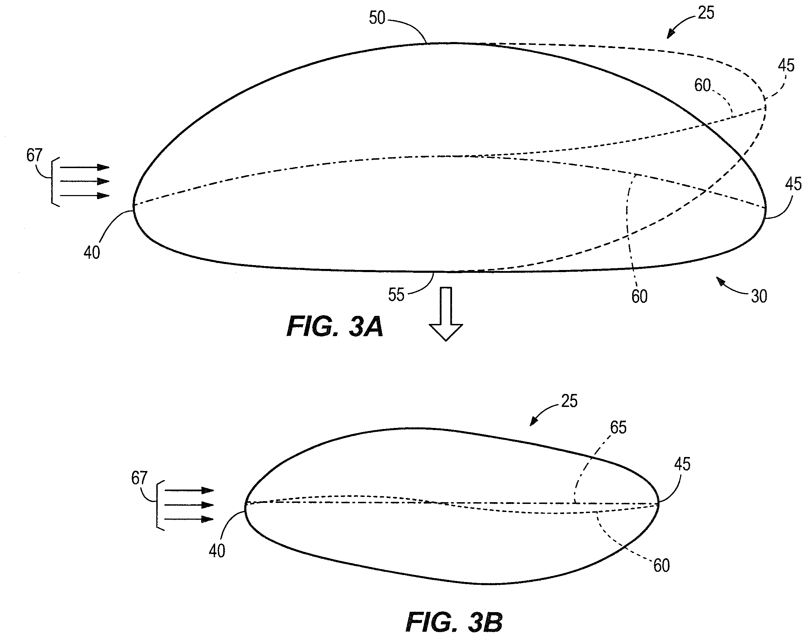

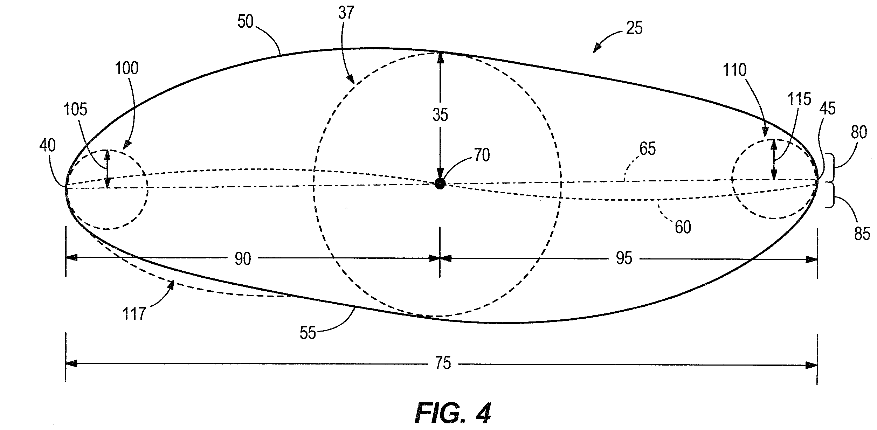

The RTE airfoil 25 and the elliptical airfoil 30 both include a maximum thickness 35, which is the same for both airfoils in FIG. 2. The maximum thickness 35 is defined by the diameter of the largest circle that can extend between the upper surface 50 and the lower surface 55. The maximum thickness 35 must be maintained relative to the size of the rest of the rotor blade 23 to meet the strength requirements of the rotor blade 23. However, a relatively thick maximum thickness does not necessarily result in the optimal aerodynamic design of the airfoil body 57. Ideally, the maximum thickness is 25%-30% of a chord length of the airfoil, but could be as much as 70%-90%. Airfoil chord lengths are defined and discussed in more detail with reference to FIGS. 3B and 4.

Referring specifically to the elliptical airfoil 30 in FIG. 2, the leading edge 40 is a mirror image of the trailing edge 45. The upper surface 50 connects the leading edge 40 with the trailing edge 45 via an elliptical curve, while the lower surface 55 connects the leading edge 40 with the trailing edge 45 via a flat or near-flat plane. The result of these connections is that the upper surface 50 is more rounded than the lower surface 55. The RTE airfoil 25 in FIG. 2 is the same as the elliptical airfoil 30 along the leading edge 30. However, the trailing edge 45 of the RTE airfoil 25 is flipped (i.e., the trailing edge is reversed, hence the "reverse trailing edge" nomenclature) relative to the elliptical airfoil 30. The maximum thickness 35 remains the same in the RTE airfoil 25 as in the elliptical airfoil 30. Thus, the upper surface 50 and the lower surface 55 of the RTE airfoil 25 have a similar curve.

In some embodiments, the rotor blade 23 cross-sections change along a length 19 of the rotor blades 23. It is particularly advantageous for the cross-section of the rotor blades 23 closer to the rotational axis A to be an RTE airfoil 25, while the cross-section of the rotor blades 23 further away (i.e., near the rotor blade tip 21) to be a standard thin airfoil with a sharp trailing edge.

FIG. 3A illustrates similar cross-sections to those shown in FIG. 2, although with the addition of a camber line 60 shown on both the RTE airfoil 25 and elliptical airfoil 30. The camber line is a line that lies in the airfoil cross-section halfway between the upper surface 50 and the lower surface 55. Thus, the camber line 60 of the RTE airfoil 25 overlaps the camber line 60 of the elliptical airfoil 30 near the leading edge 40. However, the camber lines 60 of the respective airfoils diverge toward the trailing edge 45 of the respective airfoils.

FIG. 3B illustrates a re-aligned cross-section of the RTE airfoil 25 shown in FIG. 3A and illustrates a chord line 65. In this case, re-aligned means the RTE airfoil 25 is rotated clockwise to a nominal, i.e., zero-degree, angle of attack. The chord line 65 joins the leading edge 40 and the trailing edge 45 of the RTE airfoil 25. The angle of attack is the angle at which the chord line 65 of the RTE airfoil 25 meets wind 67 passing over the RTE airfoil 25. Another feature of the camber line 60 is that it intersects the chord line 65 at the leading edge 40 and at the trailing edge 45. The elliptical airfoil 30 also includes a chord line, but this is not shown in FIG. 3A to reduce confusion in the drawings.

FIG. 4 is a cross-section of the RTE airfoil 25 and includes numerous other relative dimensions for defining the shape of the RTE airfoil 25. The cross-section shown in FIG. 4 is a profile taken perpendicular to the leading edge 40 of the RTE airfoil 25. The chord line 65 has a chord length 75, which is the length of the chord line 65. A midpoint 70 of the chord line 65 is located along the chord line 65 at half of the chord length 75. In the RTE airfoil 25 shown in FIG. 4, the midpoint 70 is also at the location of the maximum thickness 35 of the RTE airfoil 25 along the chord line 65, and thus the center of the circle 37 defining the maximum thickness 35 is also at the midpoint 70. Even more, the camber line 60 passes through the midpoint 70. Thus, the RTE airfoil 25 shown in FIG. 4 is symmetric. Stated otherwise, the RTE airfoil 25 profile taken from the leading edge 40 to the midpoint 70 is an inverted, mirror image of the RTE airfoil 25 profile taken from the midpoint 70 to the trailing edge 45. In other embodiments, the shape of the upper surface 50 and lower surface 55 may be different shapes, for example to fine-tune the aerodynamic properties of the RTE airfoil 25. In these embodiments, the RTE airfoil 25 may not be symmetric, and thus the midpoint 70 along the chord line 65 will not be at the location of maximum thickness 35 of the airfoil 25. The chord length 75 is divided into a first length 90 and a second length 95. The first length 90 and the second length 95 are connected at the mid-point 70. In the RTE airfoil 25 shown in FIG. 4, the first length 90 is the same as the second length 95. In other examples of the RTE airfoil 25, the first length 90 may not be the same as the second length 95.

The RTE airfoil 25 shown in FIG. 4 illustrates both the camber line 60 and the chord line 65. In locations along the chord line 65, the camber line 60 is offset from the chord line 65. The offset areas are defined as having either positive camber 80 or negative camber 85. Positive camber 80 occurs when the camber line 65 is closer to the upper surface 60 than the chord line 65. Negative camber 85 occurs when the camber line 65 is closer to the lower surface 55 than the chord line 65. The RTE airfoil 25 in FIG. 4 has a positive camber 80 along the first length 90 and a negative camber 85 along the second length 95. This results in an S-shaped camber line 60. In FIG. 4, the magnitude of the positive camber 80 is the same as the magnitude of the negative camber 85, although in some embodiments the magnitude of the positive camber 80 is smaller or larger than the magnitude of the negative camber 85. In other embodiments, the RTE airfoil 25 can include a positive camber 80 along the first length 90, and a zero camber along the second length 95. In yet other embodiments, the RTE airfoil 25 can include a zero camber along the first length 90, and a negative camber 85 along the second length 95. In yet other embodiments, droop 117 can be added to the lower surface 55, which reduces the positive camber 80 near the leading edge 40.

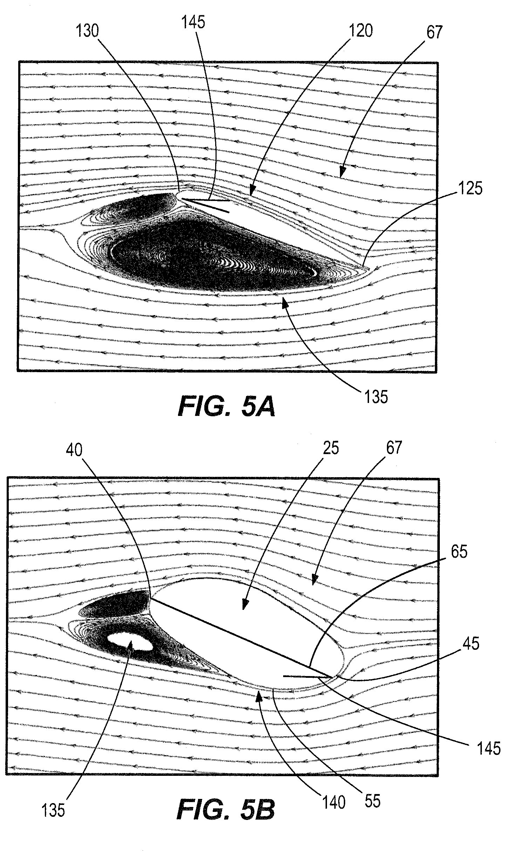

The RTE airfoil 25 includes a leading edge radius 105 and a trailing edge radius 115. The leading edge radius 105 is the radius of curvature of the leading edge 40. The leading edge radius 105 is extrapolated into a leading edge circle 100 to better illustrate this concept. Similarly, the trailing edge radius 115 is the radius of curvature of the trailing edge 45. The trailing edge radius 115 is likewise extrapolated into a trailing edge circle 110 to better illustrate this concept. As shown in FIG. 4, the leading edge radius 105 and the trailing edge radius 115 are equal. The leading edge 40 and the trailing edge 45 are preferably rounded, or more specifically are continuous curves without discontinuity. Preferably, the leading edge radius 105 and the trailing edge radius 115 are at least 0.5% of the chord length 75. However, in other embodiments the leading edge radius 105 and the trailing edge radius 115 vary relative to one another. In some embodiments, the trailing edge radius 115 is effectively zero, resulting in a sharp trailing edge 125 like that illustrated in FIG. 5A.

FIGS. 5A and 5B illustrate airfoils in a reverse flow condition. Fundamental to rotor blades 23 in high speed forward flight is a reverse flow condition at an inboard location 24 (i.e., near to the hub 20, 22 along the length 19 of the rotor blade 23; *see* Fig. 1) on a retreating side of the rotor blade 23. The reverse flow condition occurs when the rotorcraft 10 is moving faster than a rotational speed of the rotor blade 23, which typically occurs in regions of the rotor blade 23 near the hub 20, 22, and results in air flowing backwards, i.e., from trailing edge 45 to leading edge 40, over the airfoil.

The reverse flow condition creates separation of airflow over the airfoil, which hurts overall rotor blade 23 performance because it creates a relatively high drag and a negative lift condition. A region 135 where flow is not attached to the airfoil is shown in FIG. 5A on a standard airfoil 120. As shown with the direction of the wind 67, the airflow is moving from the sharp trailing edge 125 of the standard airfoil 120 to the leading edge 130. The reverse flow condition is more detrimental at high angles of attack (i.e., a high pitch angle of the rotor blade 23). The chord line 65 is shown in FIG. 5B to help illustrate a blade pitch angle 145, which is approximately the same in FIGS. 5A and 5B. The blade pitch angle 145 is the angle of the blade relative to a horizontal line with respect to gravity.

The RTE airfoil 25 addresses this issue and limits flow separation on the retreating side of the rotor blade 23. In a rotorcraft 10 with two rotor systems 16 and 18, both rotor blades 23 can include an RTE airfoil 25. The RTE airfoil 25 is shown in FIG. 5B, and illustrates that the region 135 where flow is not attached to the airfoil of the RTE airfoil 25 is much smaller when compared to the region 135 of the standard airfoil 120. Like FIG. 5A, wind 67 is travelling from the trailing edge 45 to the leading edge 40. Notably, much of the lower surface 55 is instead a region 140 where flow is still attached to the RTE airfoil 25. The smooth exterior contours of the RTE airfoil, and especially a rounded trailing edge 45, further limit separation of the airflow. The droop 117 of the lower surface 55 can even further delay separation at the region of the reversed flow condition on the rotor blade 23. To summarize, the rounded trailing edge 45 and the camber line 60 having the S-shape, in use of the RTE airfoil 25 at a first operating point, increase a length of flow attachment to the airfoil compared to a length of flow attachment to the standard airfoil 120 operating at the first operating point. This is especially true when the first operating point includes the positive leading edge 40 up blade pitch angle 145, as shown in Figs. 5A and 5B.

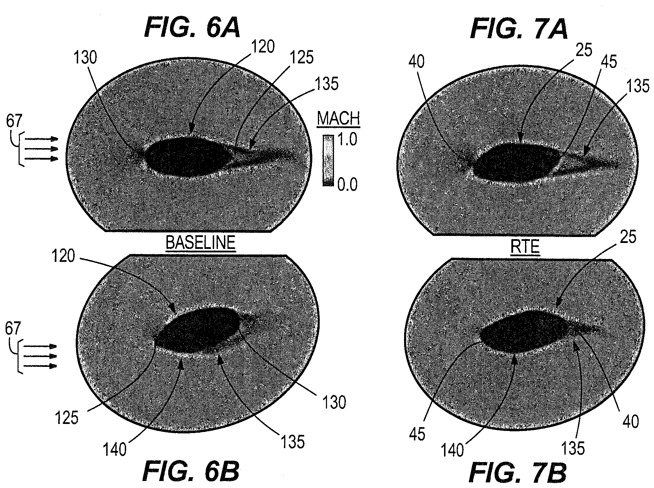

FIGS. 6A-7B are airflow diagrams that serve to illustrate the flow attachment of the standard airfoil 120 compared with the RTE airfoil 25. FIGS. 6A and 7A illustrate an airfoil in a forward flow condition and FIGS. 6B and 7B illustrate the airfoil in a reverse flow condition, with the standard airfoil 120 in FIGS. 6A and 6B and the RTE airfoil 25 in FIGS. 7A and 7B. The region 135 without flow attachment under the normal flow condition is about the same size in the standard airfoil 120 as in the RTE airfoil 25. However, in the reverse flow condition, the region 135 without flow attachment is much larger on the standard airfoil 120 than on the RTE airfoil 25, while the region 140 with flow attachment on the RTE airfoil 25 is much larger than on the standard airfoil 120.

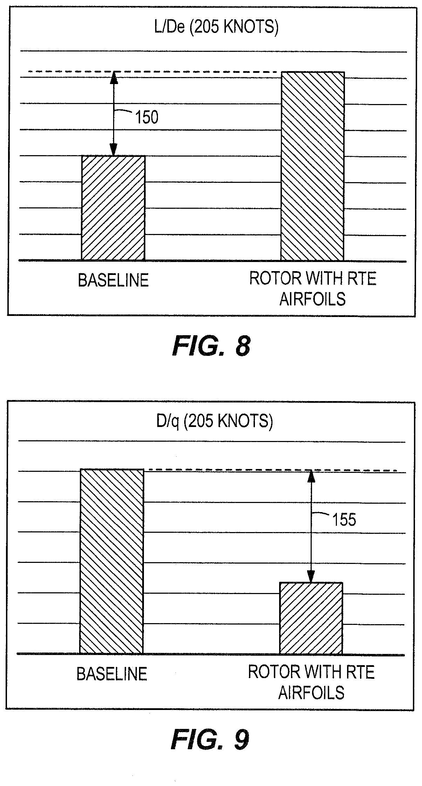

FIGS. 8 and 9 graphically depict performance of the rotor with the standard airfoil 120 compared to the rotor with the RTE airfoil 25. At 205 knots of airspeed, lift to drag ratio of the rotor blade 23 with the RTE airfoil 25 is 2% higher compared to the standard airfoil 120. This has the advantage that less power is required for a given lift, which improves performance of the rotorcraft 10. The power can be, in some examples, drag or torque driven. This concept is shown visually in the gap 150 between the respective lift vs. drag ratios in FIG. 8. Further, at 205 knots of airspeed, drag of the rotor blade 23 with the RTE airfoil 25 is 10% less than that of the standard airfoil 120. This has the advantage that less power is required to overcome blade drag for the translational thrust system 15, which improves performance of the rotorcraft 10. Similar benefits have been achieved at many other operating conditions. This is shown visually in the gap 155 between the respective drags in FIG. 9.

Embodiments disclosed herein are primarily for exemplary purposes. It should be understood that alternative embodiments or various combinations of features described herein may be implemented.

Various features and advantages of the embodiments described herein are set forth in the following claims.

## Claims

1. An airfoil for a rotor blade configured for use on a dual-rotor rotorcraft, the airfoil comprising:
an airfoil body having a leading edge, a trailing edge opposite the leading edge, an upper surface and a lower surface opposite the upper surface, wherein the airfoil body, in cross-section, has a profile defined by:
a chord length extending from the leading edge of the airfoil body to the trailing edge of the airfoil body,
a maximum thickness at a midpoint of the chord length, wherein the maximum thickness is defined by a diameter of a largest circle extending between the upper surface of the airfoil body and the lower surface of the airfoil body, and
a camber line, wherein the camber line is an S-shape such that the camber line has a positive camber from the leading edge of the airfoil body to the midpoint of the chord length and has a negative camber from the midpoint of the chord length to the trailing edge of the airfoil body.

2. The airfoil of claim 1, wherein a radius of the leading edge is a continuous curve without discontinuity.

3. The airfoil of claim 1 or 2, wherein a radius of the trailing edge is rounded and the rounded trailing edge of the profile and the camber line having the S-shape of the profile are configured to, in use of the airfoil at a first operating point, increase a length of flow attachment to the airfoil compared to a length of flow attachment to an airfoil with an elliptical profile operating at the first operating point, and wherein the first operating point includes a positive pitch angle.

4. The airfoil of one of claims 1-3, wherein a radius of the trailing edge is a continuous curve without discontinuity.

5. The airfoil of one of claims 1-4, wherein a radius of the leading edge and a radius of the trailing edge are equal.

6. The airfoil of one of claims 1-5, wherein the camber line passes through the midpoint of the chord length.

7. The airfoil of one of claims 1-6, wherein the positive camber is a same magnitude as the negative camber, and/or the positive camber is a smaller magnitude than a magnitude of the negative camber.

8. The airfoil of one of claims 1-7, wherein the chord length, the maximum thickness at the midpoint of the chord length, and the camber line are all dimensions of the profile taken in a cross-section of the airfoil, the cross-section of the airfoil taken perpendicularly to the leading edge of the airfoil.

9. The airfoil of one of claims 1-8, wherein a half of the profile taken from the midpoint of the chord length extending toward the leading edge is an inverted, mirror image of a second half of the profile taken from the midpoint of the chord length extending toward the trailing edge.

10. An airfoil for a rotor blade, the airfoil comprising:
an airfoil body having a leading edge, a trailing edge opposite the leading edge, an upper surface and a lower surface opposite the upper surface, wherein the airfoil body, in cross-section, has a profile defined by:
a chord length extending from the leading edge of the airfoil to the trailing edge of the airfoil,
a maximum thickness at a midpoint of the chord length, wherein the maximum thickness is defined by a diameter of a largest circle extending between the upper surface of the airfoil and the lower surface of the airfoil, and
a camber line, wherein the camber line has a negative camber from the midpoint of the chord length to the trailing edge of the airfoil.

11. The airfoil of claim 10, wherein a radius of the leading edge is a continuous curve without discontinuity, and wherein a radius of the trailing edge is a continuous curve without discontinuity, particularly wherein the camber line has a zero camber from the leading edge of the airfoil to the midpoint of the airfoil.

12. The airfoil of one of claims 1-11, wherein a radius of the leading edge is at least 0.5% of the chord length, and/or wherein a radius of the trailing edge is at least 0.5% of the chord length.

13. The airfoil of one of claims 1-12, wherein a radius of the trailing edge is rounded.

14. A dual-rotor rotorcraft having a first rotor and a second rotor, wherein the first rotor comprises a first airfoil and the second rotor comprises a second airfoil, and wherein the first airfoil comprises the airfoil according to one of claims 1-13.

15. The dual-rotor rotorcraft of claim 14, wherein the second airfoil comprises the airfoil according to one of claims 1-13, and wherein the first rotor and the second rotor rotate in opposite directions.
